(19) Europäisches Patentamt / European Patent Office / Office européen des brevets

(11) **EP 1 760 566 A1**

(12) **EUROPEAN PATENT APPLICATION**

(43) Date of publication:
**07.03.2007 Bulletin 2007/10**

(51) Int Cl.:
***G06F 1/00*** (2006.01)

(21) Application number: **05018670.9**

(22) Date of filing: **29.08.2005**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(71) Applicant: **Top Digital Co., Ltd.**
**Hsichih City**
**Taipei Hsien**
**Taiwan (CN)**

(72) Inventors:
 • **Yu, Kun-Lang**
  **An-Le District**
  **Keelung (TW)**
 • **Ouyang, Yen-Chieh**
  **North District**
  **Taichung (TW)**

(74) Representative: **LOUIS, PÖHLAU, LOHRENTZ**
 **Postfach 3055**
 **90014 Nürnberg (DE)**

(54) **Voiceprint-lock system for electronic data**

(57)  A voiceprint-lock system for electronic data includes a voiceprint-key which is used to encrypt or decrypt the electronic data to form a voiceprint-lock of the electronic data. A voiceprint verification system is used to generate a voiceprint feature from which to retrieve the voiceprint-key. The voiceprint verification system includes a front-end processing portion, a feature-retrieving portion, a training system and a testing system so as to process raw voice data for training or testing operation.

FIG. 10

EP 1 760 566 A1

**Description**

BACKGROUND OF THE INVENTION

1. Field of the Invention

The present invention relates to a voiceprint-lock system use for electronic data such as computer-based (digital) materials, files or directories. Particularly, the present invention relates to the voiceprint-lock system for encrypting/decrypting electronic data in use for security. More particularly, the present invention relates to the voiceprint-lock system build in a computer file for transmission security or in a computer system for secure storage.

2. Description of the Related Art

Currently, biological features (i.e. unique physical traits) have been gradually and widely used in personal verification. A bunch of technologies using biological features for personal verification include face recognition, fingerprint recognition, palm print recognition, voiceprint recognition, iris recognition and DNA fingerprint recognition etc.

Many approaches to security of personal electronic data have long been developed. For instance, a secret code or a password is traditionally used to secure personal electronic data, but it cannot effectively protect personal electronic data because of leakage of secret code or on-line invasion by hackers. The secret code or password, after all, is difficult to remember and easy to steal. Hence, there is a need for seeking out other effective measures for security of the personal electronic data. In consideration of practical use and cost for biometrics, it is found that voiceprint recognition is suitably going to the main stream of personal verification.

U.S. Patent Application Publication No. 2002/0116189 discloses a recognition method and a device therefor verifying a user by information of voice spectrum. The recognition method uses unique information of voice spectrum to verify a person's identity in such a way to confirm authorization of the user. The recognition method comprises the steps of: (1) detecting an end point of the voice from the user; (2) retrieving features from a voice spectrum of the voice; (3) deciding whether training is required, if yes, processing the features as a reference sample and setting a boundary in registering the voice features, if no, automatically executing the next step; (4) comparing patterns between registered features with the reference sample's features; (5) calculating the distance of the gap between the registered features and the reference sample's features based on the calculation result; (6) comparing the calculation result with the boundary; (7) discriminating whether the user has been authorized based on the comparison result.

The recognition method is applied in mobile phones or computer related products and can extract the unique feature of the voice by a voice spectrum analysis for verifying the user. The primary value of each frame is compared with the boundary set by the user to decide the starting point and end point of the voice. A Princen-Bradley filter is then used to convert the detected voice signals to retrieve corresponding voice spectrum patterns which are compared with reference voice spectrum samples stored previously for verifying the voiceprint of the user.

In brief, pattern matching and distance calculation are required in this method. The user can pass the verification if the calculated distance of the extracted feature (i.e. voiceprint) is within the boundary. However, the distance between the reference samples and the testing samples must be calculated while processing matching of the patterns and calculation of the distance. The reference samples occupy a considerable memory space of a memory device. As a result, a large memory capacity is required and the time for transferring files is relatively long. In protecting personal electronic data, the reference samples occupied a large memory space is unsuitable for storing in a limited storage space.

Hence, there is a need for improving the larger occupation of the reference samples and saving the storage space so that the reference samples are capable of storing in the limited storage space of memories.

Accordingly, a voiceprint verification system employs a front-end processing for retrieving effective voice data and filtering noneffective voice data from the raw voice data before training and testing for retrieving features. An amount of the processing data requiring in verification can be reduced and the verification ratio can be increased.

The present invention intends to provide a voiceprint-key generated from the voiceprint verification system: for instance, retrieving from a voiceprint feature. The voiceprint-key can be used to encrypt or decrypt the electronic data to form a voiceprint-lock which can protect the electronic data for storage.

SUMMARY OF THE INVENTION

The primary objective of this invention is to provide a voiceprint-lock system having a voiceprint-key used to encrypt or decrypt electronic data to form a voiceprint-lock of the electronic data. Accordingly, the voiceprint-lock system can ensure the electronic data for storage security.

The secondary objective of this invention is to provide the voiceprint-lock system having a voiceprint verification system which employs a front-end processing for retrieving effective voice data and filtering noneffective voice data from the raw voice data before training and testing for retrieving features. Accordingly, an amount of the processing data requiring in verification can be reduced and the verification ratio can be increased.

Another objective of this invention is to provide the voiceprint-lock system which employs front-end processing to reduce effective voice data. Voice features are retrieved and Viterbi algorithm is employed to obtain a most similar path in calculating model parameters (i.e., expectation value and variance of each status) for storage. In training or testing, only calculation of the possibility of similarity between the model parameters and the tested voice features is required to obtain a voiceprint feature. Accordingly, the testing or training operation for voiceprint verification is simplified.

The voiceprint-lock system in accordance with the present invention includes a voiceprint-key which is used to encrypt or decrypt electronic data to form a voiceprint-lock of the electronic data. A voiceprint verification system is used to generate a voiceprint feature from which to retrieve the voiceprint-key. The voiceprint verification system includes a front-end processing portion, a feature-retrieving portion, a training system and a testing system so as to process raw voice data for training or testing operation.

In training operation, the training system employs the front end processing portion for retrieving effective training data from the input raw voice data; using the feature-retrieving portion to retrieve a training voice feature; calculating the training voice feature to obtain a most similar path for determining model parameters. In testing operation, the testing system employs the front-end processing portion for retrieving effective testing data from the input raw voice data; using the feature-retrieving portion to retrieve a testing voice feature; calculating the possibility of similarity between the testing voice feature and the model parameters so as to generate a result of the voiceprint verification.

Further scope of the applicability of the present invention will become apparent from the detailed description given hereinafter. However, it should be understood that the detailed description and specific examples, while indicating preferred embodiments of the invention, are given by way of illustration only, since various will become apparent to those skilled in the art from this detailed description.

BRIEF DESCRIPTION OF THE DRAWINGS

The present invention will become more fully understood from the detailed description given hereinbelow and the accompanying drawings which are given by way of illustration only, and thus are not limitative of the present invention, and wherein:

FIG. 1 is a flowchart diagram of a voiceprint verification system used in a voiceprint-lock system in accordance with the present invention;

FIG. 2 is a schematic diagram illustrating relationship between statuses and frames of the voiceprint verification system used in the voiceprint-lock system in accordance with the present invention;

FIG. 3 is a schematic diagram illustrating initial distribution models of the statuses and the frames of the voiceprint verification system used in the voiceprint-lock system in accordance with the present invention;

FIG. 4 is a schematic diagram illustrating status conversion of the voiceprint verification system used in the voiceprint-lock system in accordance with the present invention;

Fig. 5 is a schematic diagram illustrating a most similar path of the voiceprint verification used in the voiceprint-lock system in accordance with the present invention;

FIG. 6 is a schematic diagram illustrating division of the frames of the voiceprint verification used in the voiceprint-lock system in accordance with the present invention;

FIG. 7 is a schematic diagram illustrating a first redistribution of the frames of the voiceprint verification used in the voiceprint-lock system in accordance with the present invention;

FIG. 8 is a schematic diagram illustrating a second redistribution of the frames of the voiceprint verification used in the voiceprint-lock system in accordance with the present invention;

FIG. 9 is a schematic diagram illustrating an optimal distribution of the frames of the voiceprint verification used in the voiceprint-lock system in accordance with the present invention;

FIG. 10 is a schematic diagram illustrating the voiceprint-lock system for encryption and decryption of electronic data in accordance with a first embodiment of the present invention; and

FIG. 11 is a schematic diagram illustrating the voiceprint-lock system for encryption and decryption of electronic data in accordance with a second embodiment of the present invention.

DETAILED DESCRIPTION OF THE INVENTION

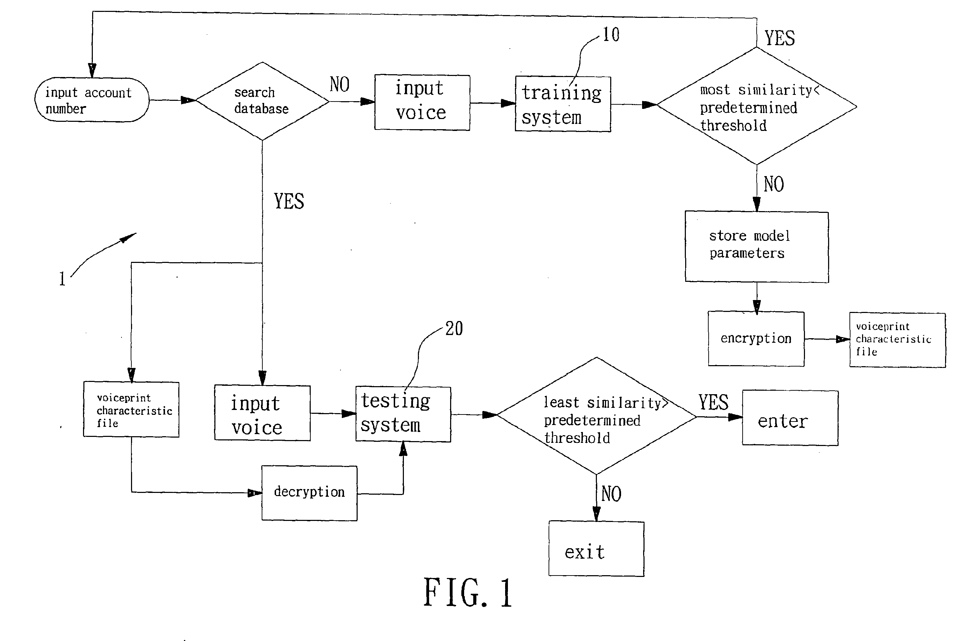

The voiceprint-lock system in accordance with the present invention includes a voiceprint verification system for training or testing input raw voice data. FIG. 1 is a flowchart diagram of a voiceprint verification system used in the voiceprint-lock system in accordance with the present invention.

Still referring to FIG. 1, the voiceprint verification system 1 in accordance with the present invention comprises a training system 10 and a testing system 20 for processing input raw voice data in training or testing operation. The voiceprint verification system 1 further includes a front-end processing portion, a feature-retrieving portion, a storage portion, and an operational portion. The front-end processing portion and the feature-retrieving portion are utilized by the training system 10 and the testing system 20 for front-end processing and retrieving effective voice data. The storage portion can store voice features obtained from the training system 10, and the operational portion can calculate the stored voice features and the features of the input voice data obtained from the testing system 20.

Still referring to FIG. 1, when a user logins the voiceprint verification system 1 in accordance with the present invention, an account number is requested for verifying the user. The voiceprint verification system 1 checks up the database whether the input account number has been registered. If the account number has not been registered, the procedure is automatically moved to the training system 10 for training and registering voice data for a new account number. But, if the account number has been registered, the procedure is automatically moved to the testing system 20 for verifying whether the features of the input voice match those stored in the account number.

Before retrieving the features of voice, the front-end processing portion retrieves the effective voice data from the raw voice data and filters non-effective voice data. Short-energy and zero-crossing rate are employed in the present invention for detection purposes. In the present invention, a calculating method combining Gauss possibility distribution is employed, and the equation is as follows:

$$b_i(\overrightarrow{x}) = \frac{1}{(2\pi)^{D/2}|\Sigma_i|^{1/2}} \exp\left\{-\frac{1}{2}(\overrightarrow{x}-\overline{u_i})'\Sigma_i^{-1}(\overrightarrow{x}-\overline{u_i})\right\} \tag{1}$$

wherein $\overrightarrow{x}$ is the original signal that is divided into a plurality of frames in D-dimension, $b_i(\overrightarrow{x})$ is the possibility while i = 1,..., M, $\overline{u_i}$ is the expectation value of the background noise signal, and $\Sigma_i$ is the variance of the background noise signal. Since D in $\frac{1}{(2\pi)^{D/2}}$ is certain (D=256 in this case), it is neglected, and equation (1) is simplified as follows:

$$b_i(\overrightarrow{x}) = \frac{1}{|\Sigma_i|^{1/2}} \exp\left\{-\frac{1}{2}(\overrightarrow{x}-\overline{u_i})'\Sigma_i^{-1}(\overrightarrow{x}-\overline{u_i})\right\} \tag{2}$$

The exponential calculation may be too large. The equation (2) is simplified and rewritten into equation (3) after obtaining its logarithm.

$$b_i(\overrightarrow{x}) = \ln\left(\frac{1}{|\Sigma_i|^{1/2}} \exp\left\{-\frac{1}{2}(\overrightarrow{x}-\overline{u_i})'\Sigma_i^{-1}(\overrightarrow{x}-\overline{u_i})\right\}\right)$$

$$= \ln\frac{1}{|\Sigma_i|^{1/2}} - \frac{1}{2}(\overrightarrow{x}-\overline{u_i})'\Sigma_i^{-1}(\overrightarrow{x}-\overline{u_i})$$

$$b_i(\overrightarrow{x}) = \left(-\frac{1}{2}\right)\ln|\Sigma_i| - \frac{1}{2}(\overrightarrow{x}-\overline{u_i})'\Sigma_i^{-1}(\overrightarrow{x}-\overline{u_i}) \tag{3}$$

The first 256 points of the front portion of the raw voice data are extracted to calculate the expectation value, variance of the short-energy and zero-crossing. The two values and the raw voice data are substituted into equation (3) for calculation purposes. Since the distributive possibility area of the short-energy and zero-crossing includes effective voice data and non-effective voice data, the non-effective voice data can be removed to reduce the amount of data while allowing correct retrieval of the effective voice data.

When the feature-retrieving portion retrieves voice features from the input voice data, there are two parameters used in the present invention for verifying voice features. The parameters include linear predictive coding (LPC) and Mel frequency cepstral coefficient (MFCC). Each of the parameters includes twelve cepstral coefficients and twelve delta-cepstral coefficients. Equation (4) is obtained after carrying out partial differentiation on the cepstral coefficients with respect to time:

$$\Delta c_n(t) = \frac{\partial c_n(t)}{\partial t} = \frac{\sum_{k=-K}^{K} kc_n(t+k)}{\sum_{k=-K}^{K} k^2} \quad (4)$$

wherein K is the number of considered frames.

The equation (4) is too complicated and thus simplified to merely consider two anterior frames and two posterior frames, obtaining the following equations (5)-(9):

$$\Delta C_n^0 = [2 * C(2,n) + C(1,n)]/5 \quad (5)$$

$$\Delta C_n^1 = [2 * C(3,n) + C(2,n) - C(0,n)]/6 \quad (6)$$

$$\Delta C_n^i = [2 * C(i+2,n) + C(i+1,n) - C(i-1,n) - 2 * C(i-2,n)]/10 \quad (7)$$

$$\Delta C_n^{L-2} = [C(L-1,n) - C(L-3,n) - 2 * C(L-4,n)]/6 \quad (8)$$

$$\Delta C_n^{L-1} = [-C(L-2,n) - 2 * C(L-3,n)]/5 \quad (9)$$

wherein $C_n$ is the feature value in n-th order, L is the total number of the frames in the signal, and i is the serial number of the frames.

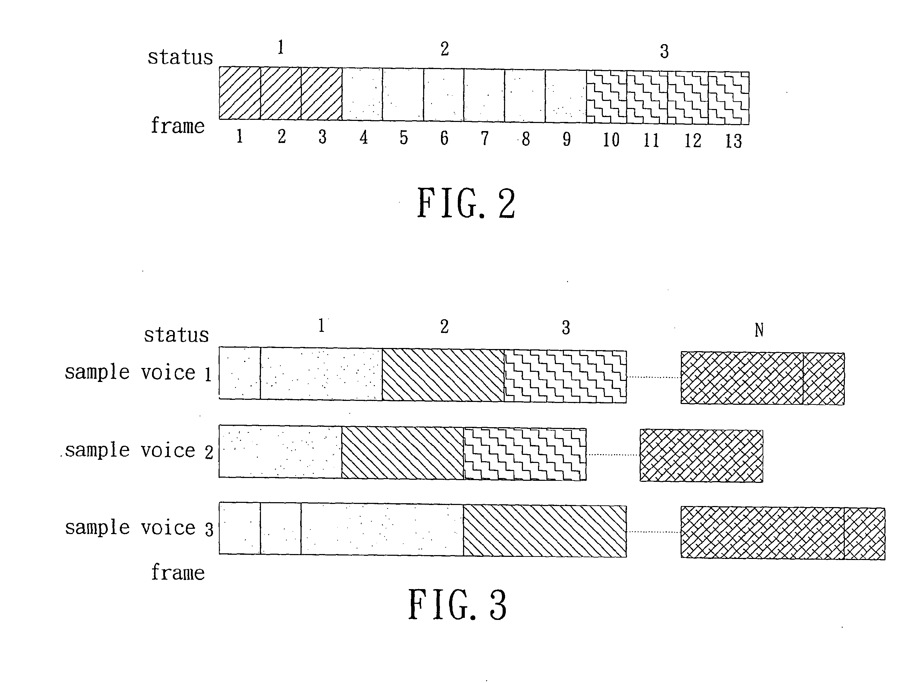

FIG. 2 is a schematic diagram illustrating relationship between statuses and frames of the voiceprint verification system used in the voiceprint-lock system in accordance with the present invention.

In training process, the term "status" means the change in the mouth shape and the vocal band. Generally, a speaker's mouth has changes in shape while speaking. Thus, each status is the feature of the change of the voice. In some cases, a single sound contains several statuses. The size of the respective status is not fixed like the frame. A status usually includes several or tens of frames.

As illustrated in FIG. 2, the first status includes three frames, the second status includes six frames, and the third status includes four frames. In the beginning, it is assumed that the relationship between statuses and frames are equally divided. Subsequently, the initial model parameters including expectation values and variances of each status are calculated. The relationship between statuses and frames are redistributed by the initial model parameters for obtaining new cutting points. Each of the statuses corresponding to the frame is calculated again for redistribution by using the new cutting points. The relationship between statuses and frames and each status corresponding to the frame are repeatedly calculated for redistribution until the maximum possibility of similarity cannot be raised.

FIG. 3 is a schematic diagram illustrating initial distribution models of the statuses and the frames of the voiceprint verification system used in the voiceprint-lock system in accordance with the present invention. For example, three sample voices are equally divided in an initial distribution model.

In the initial model the voices are equally divided for forming frames, the residual frame, if any, is equally divided into two groups and the result is added into each of the first status and the last status. Referring to FIG. 3, three factors must be considered in the distribution model: (1) the first frame must belong to the first status, (2) the last frame must belong to the last status, and (3) the status in the frame either remains unchanged or the change of the status in the frame continues to the next one. Gauss distribution possibility is employed to calculate the possibility of each frame of each state, and Viterbi algorithm is employed to obtain the most similar path.

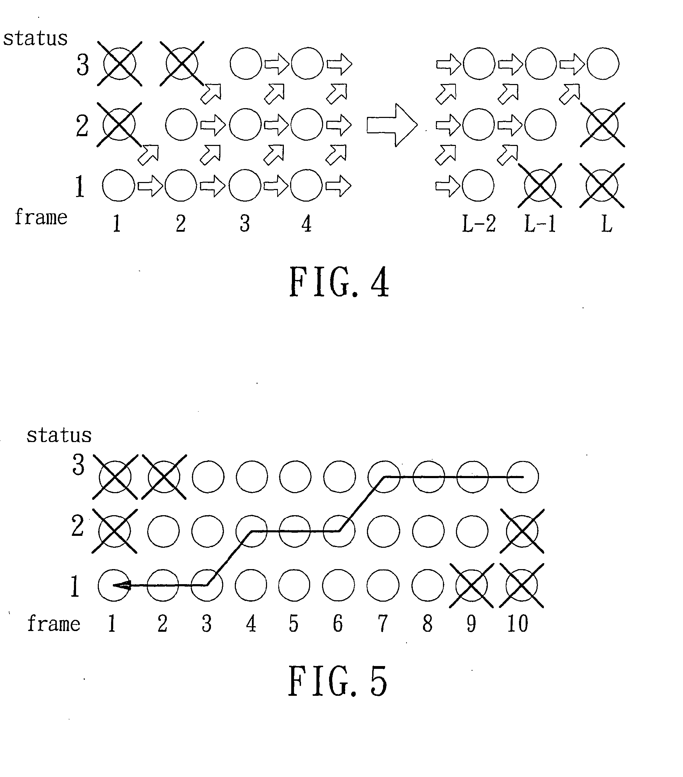

FIG. 4 is a schematic diagram illustrating status conversion of the voiceprint verification system used in the voiceprint-lock system in accordance with the present invention.

FIG. 4 shows the possible conversion of the statuses of frames (the number of which is L) when three statuses is involved. The crossed frame is deemed as an impossible status, and the directions indicated by the arrows are the possible paths of the change of the statuses.

FIG. 5 is a schematic diagram illustrating a most similar path of the voiceprint verification used in the voiceprint-lock system in accordance with the present invention.

As illustrated in FIG. 5, in retrieving features, the most similar path includes a first status having the first, the second, and the third frames, a second status having the fourth, the fifth, and the sixth frames, and a third status having the seventh, the eight, the ninth, and the tenth frames.

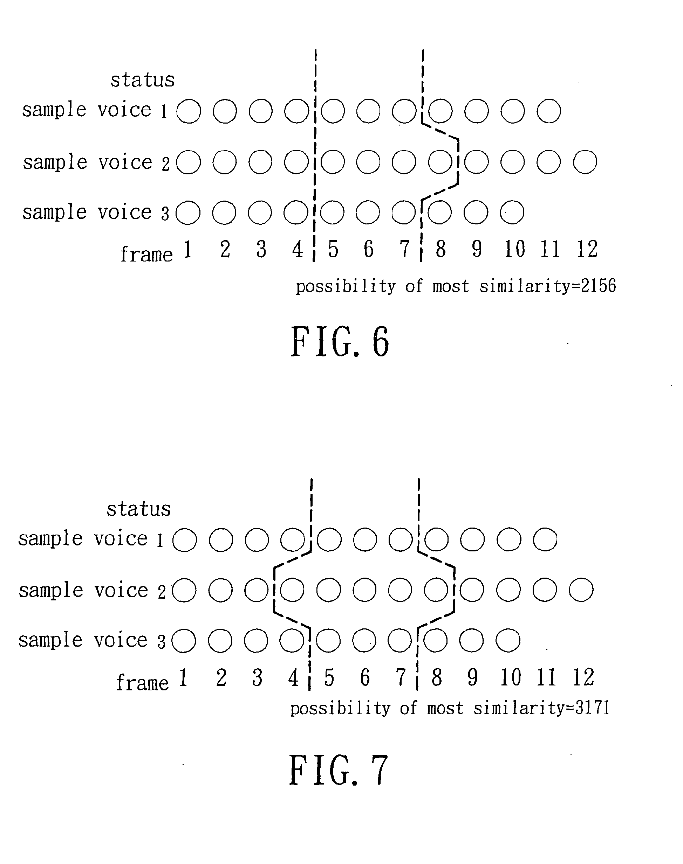

FIG. 6 is a schematic diagram illustrating division of the frames of the voiceprint verification used in the voiceprint-lock system in accordance with the present invention.

FIG. 6 shows initial models of three statuses of three sample voices, which are distributions after equal division. The first sample voice is divided equally into three statuses each having three frames, and the residual two frames are divided equally and added into the first status and the second status respectively. The second sample voice is divided equally into three statuses each having four frames. The third sample voice is divided into three statuses each having three frames, and one residual frame is added into the first status. After calculation, the possibility of most similarity is 2156.

FIG. 7 is a schematic diagram illustrating a first redistribution of the frames of the voiceprint verification used in the voiceprint-lock system in accordance with the present invention. As illustrated in FIG. 7, the possibility of most similarity has an increase to reach 3171 after the first redistribution.

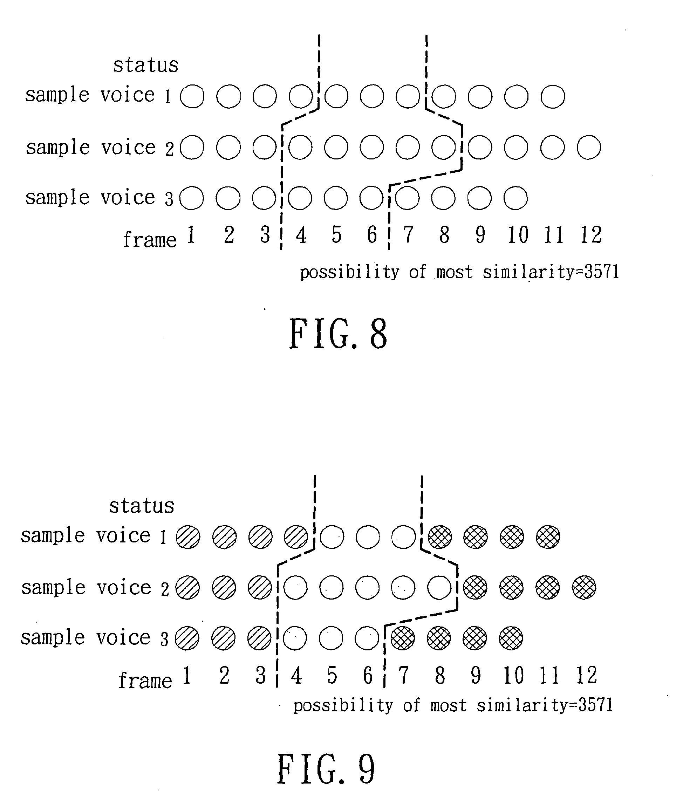

FIG. 8 is a schematic diagram illustrating a second redistribution of the frames of the voiceprint verification used in the voiceprint-lock system in accordance with the present invention. As illustrated in FIG. 8, the possibility most similarity has increase to reach 3571 after the second redistribution.

FIG. 9 is a schematic diagram illustrating an optimal distribution of the frames of the voiceprint verification used in the voiceprint-lock system in accordance with the present invention. As illustrated in FIG. 9, the possibility of most similarity cannot be raised after the third distribution. Thus, it can be deemed as the most optimal frame distribution. The expectation value and the variance of each status are calculated to obtain the model parameters that can be stored in the database.

Referring back to FIG. 1, when entering the training system 10 for proceeding with training raw voice data, equations (1)-(9) are used to obtain the effective training voice features. Viterbi algorithm is then employed to obtain the most similar path. Next, the expectation value and variance of each status are calculated to obtain the model parameters, thereby completing the voice training. The training for a user will be ended and rejected if the possibility of most similarity is smaller than a predetermined threshold. Accordingly, a new training of the voiceprint verification system 1 is required.

Conversely, the training for a user will be approved and ended when the possibility of most similarity is greater than the predetermined threshold. Hence, the model parameters are stored in a voiceprint characteristic file the voiceprint verification system 1 for voiceprint verification, and an ordinary key is used to encrypt the voiceprint characteristic file.

Still referring to FIG. 1, similarly, when entering the testing system 20 for proceeding with voice testing, equations (1)-(9) are used to obtain effective testing voice features. Meanwhile, the key is also used to decrypt the voiceprint characteristic file for processing the voiceprint verification.

Still referring to FIG. 1, the possibility of similarity between the testing voice features and the model parameters are calculated to obtain the verification result. In voiceprint verification, when the possibility of least similarity is greater than a predetermined threshold, the user can passes the testing and enter the voiceprint verification system 1. Conversely, when the possibility of least similarity is greater than the predetermined threshold, the testing of the user is failed and ended to exit the voiceprint verification system 1.

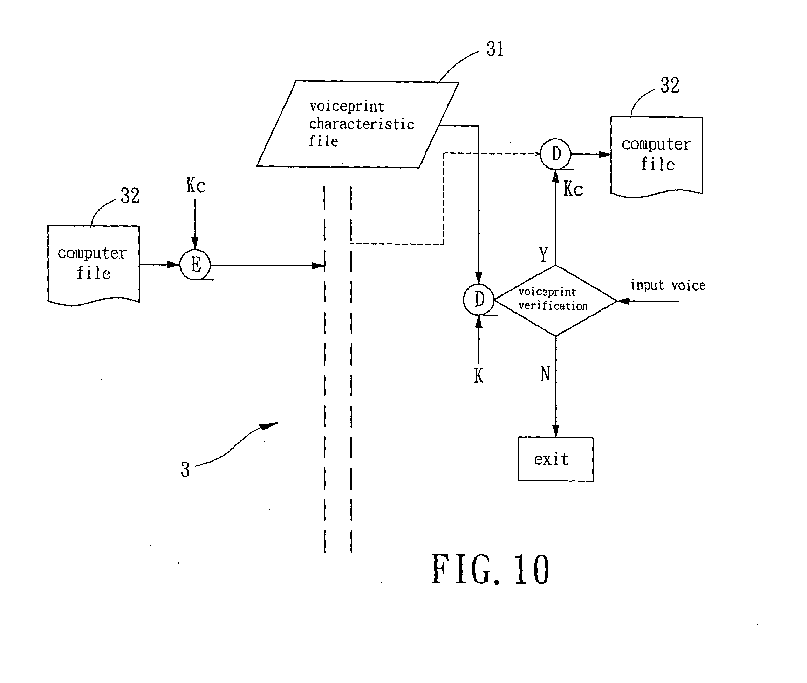

FIG. 10 is a schematic diagram illustrating the voiceprint-lock system for encryption and decryption of electronic data in accordance with a first embodiment of the present invention. The voiceprint-lock system 3 in accordance with the first embodiment of the present invention is a built-in voiceprint-lock of a computer system (not shown), and includes a voiceprint-key Kc. The voiceprint-key Kc is used to calculate electronic data for encryption or decryption, thereby forming a fixed voiceprint-lock of the electronic data stored in an electronic device. The fixed voiceprint-lock is typically suitable for use in personal computers, notebook computers, personal digital assistances or mobile phones etc.

Referring again to FIGS. 1 and 10, the voiceprint-lock system 3 employs the training system 10 of the voiceprint verification system 1 which is used to generate a voiceprint characteristic value from which to retrieve the voiceprint-key Kc. In a voiceprint training process, the training system 10 can provide a voiceprint characteristic file 31. Preferably, the voiceprint characteristic file 31 is a 32-byte file selected from the voiceprint characteristic value. The selected 32 bytes voiceprint-key, a string of 256 bits, can be used to encrypt and decrypt information to be transmitted. In practice, there is a need for inputting an identical voiceprint while storing or accessing electronic data. In storing electronic data, a user can utilize the training system 10 of the voiceprint verification system 1 to obtain the voiceprint-key Kc. In the first embodiment, the voiceprint-key Kc is used to encrypt a computer file 32 such as an electronic data file in the encryption process. Subsequently, the encrypted computer file 32 is stored in a predetermined location of the computer system while the encryption process is succeeded. In an alternative embodiment, the encryption process employs an advanced encryption standard (ASE) and symmetric key encryption for calculating the electronic data.

Still referring to FIGS. 1 and 10, first, an ordinary key K is used to calculate the encrypted voiceprint characteristic file 31 for preliminary decryption in unlocking and retrieving electronic data from the computer system in a decryption process. Second, a voiceprint testing process can be operated by the testing system 20 of the voiceprint verification system 1 so that the voiceprint testing process can verify an input voice in comparison with the voiceprint characteristic file 31 and receive a voiceprint-key Kc from the voiceprint characteristic file 31 in the event. In the first embodiment, the input voice can pass the voiceprint testing process and should be regarded as a correct password (i.e. a personal correct voiceprint) if errors of the input voice are lower than a predetermined threshold. Then, the computer system can permit a user to access the computer file 32 while the input voice has passed the voiceprint testing process and the voiceprint-key Kc has decrypted the encrypted computer file 32. But, conversely, the input voice cannot pass the voiceprint testing process and should be regarded as an incorrect password if errors of the input voice are higher than a predetermined threshold. Then, the computer system can refuse a user to access the encrypted computer file 32 and to unlock the voiceprint-lock system 3 once the input voice has failed in the voiceprint testing process.

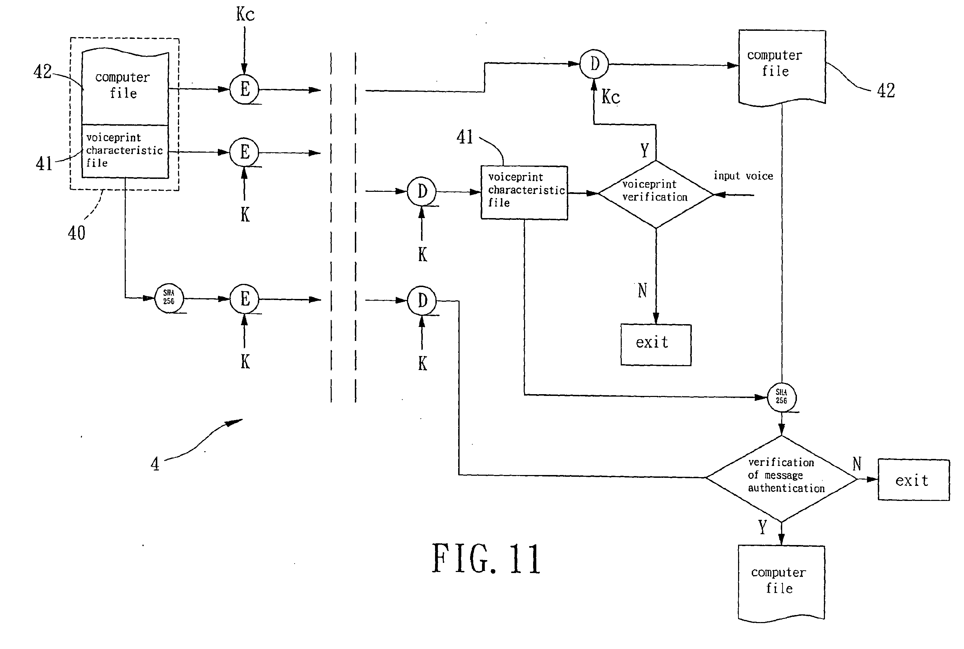

FIG. 11 is a schematic diagram illustrating the voiceprint-lock system for encryption and decryption of electronic data in accordance with a second embodiment of the present invention. The voiceprint-lock system 4 in accordance with the second embodiment of the present invention is a portable voiceprint-lock for a computer system (not shown), and includes a voiceprint-key Kc. The voiceprint-key Kc is used to encrypt or decrypt electronic data, thereby forming a portable voiceprint-lock of the electronic data stored in a computer file. The portable voiceprint-lock is typically suitable for use in compact discs, floppy disks, flash disks, magneto-optical disks or Internet transmission etc.

Referring again to FIGS. 1 and 11, the voiceprint-lock system 4 employs the training system 10 of the voiceprint verification system 1. In a voiceprint training process, the training system 10 can provide a voiceprint characteristic file 41 which is used to generate a voiceprint characteristic value from which to retrieve the voiceprint-key Kc. In storing electronic data, a user can initially utilize the training system 10 of the voiceprint verification system 1 to obtain the voiceprint-key Kc. The voiceprint characteristic file 41 is built in a computer file 42 such as an electronic file, and occupies a space ranging between 2K and 6K bytes. In the second embodiment, the voiceprint-key Kc is used to encrypt the computer file 42 to obtain an encrypted computer file in the encryption process. Meanwhile, an ordinary key K is also used to encrypt the voiceprint characteristic file 41 to obtain an encrypted voiceprint characteristic file. Subsequently, the encrypted computer file and the encrypted voiceprint characteristic file are linked together to obtain a series computer file 40. In addition, the series computer file 40 of the encrypted computer file and the encrypted voiceprint characteristic file is calculated to generate message authentication codes by appropriate means. In an alternative embodiment, the encryption process employs a secure hash algorithm (SHA) for generating message authentication codes. Moreover, the ordinary key K is also used to encrypt the message authentication codes to obtain an encrypted file of the message authentication codes. After completing the encryption process, the computer system can provide the user with a portable computer file of the electronic data consisting of the encrypted computer file, the encrypted voiceprint characteristic file and the encrypted message authentication codes, and transmitting on the Internet or storing on the memory device.

Still referring to FIGS. 1 and 11, when the user intends to unlock the electronic data in any computer system, an ordinary key K is used to decrypt the encrypted voiceprint characteristic file 41 and the encrypted message authentication codes. Then, the decrypted voiceprint characteristic file 41 and the decrypted message authentication codes can be obtained in a decryption process. Next, a voiceprint testing process can be operated by the testing system 20 of the voiceprint verification system 1 so that the voiceprint testing process can verify an input voice in comparison with the decrypted voiceprint characteristic file 41, and receive a voiceprint-key Kc from the decrypted voiceprint characteristic file 41 in the event. In the second embodiment, the input voice can pass the voiceprint testing process and should be regarded as a correct password (i.e. a personal correct voiceprint) if errors of the input voice are lower than a predetermined threshold. Then, the computer system can permit the user to access the computer file 42 while the input voice has passed the voiceprint testing process and the voiceprint-key Kc has decrypted the encrypted computer file 42. But, conversely, the input voice cannot pass the voiceprint testing process and should be regarded as an incorrect password if errors of the input voice are higher than a predetermined threshold. Then, the computer system can refuse a user to access the encrypted computer file 42 and to unlock the voiceprint-lock system 4 once the input voice has failed in the voiceprint testing process.

Still Referring to FIG. 11, lastly, the voiceprint characteristic file 41 and the computer file 42 are further required to compare with the decrypted message authentication codes in the computer system. The computer can display the computer file 42 if the decrypted voiceprint characteristic file 41 and the decrypted computer file 42 have passed in verification of the decrypted message authentication codes. But, conversely, the computer cannot display the computer file 42 and can refuse the user to unlock the voiceprint-lock system 4 if the decrypted voiceprint characteristic file 41 and the decrypted computer file 42 have failed in verification of the decrypted message authentication codes.

Although the invention has been described in detail with reference to its presently preferred embodiment, it will be understood by one of ordinary skill in the art that various modifications can be made without departing from the spirit and the scope of the invention, as set forth in the appended claims.

## Claims

1.  A voiceprint-lock system comprising:

    a voiceprint-key used to encrypt or decrypt electronic data to form a voiceprint-lock of the electronic data; and
    a voiceprint characteristic file used to generate a voiceprint characteristic value for verifying an input voice;
    wherein the input voice can pass a voiceprint testing process if errors of the input voice are lower than a predetermined threshold, and a computer system can permit a user to access the electronic data; and
    wherein the input voice cannot pass the voiceprint testing process if errors of the input voice are greater than the predetermined threshold, and the computer system can refuse the user to access the electronic data.

2.  The voiceprint-lock system as defined in claim 1, wherein the voiceprint-key is retrieved from the voiceprint characteristic value.

3.  The voiceprint-lock system as defined in claim 1, wherein the voiceprint-lock system is a built-in voiceprint-lock of the computer system.

4.  The voiceprint-lock system as defined in claim 3, wherein the voiceprint-lock system employs an ordinary key for encrypting or decrypting the voiceprint characteristic file.

5.  The voiceprint-lock system as defined in claim 1, wherein the voiceprint-lock system is a portable voiceprint-lock for the computer system.

6.  The voiceprint-lock system as defined in claim 5, wherein the voiceprint-lock system employs an ordinary key for encrypting the voiceprint characteristic file and the electronic data; and the encrypted voiceprint characteristic file and the encrypted electronic data are linked together to obtain a series computer file.

7.  The voiceprint-lock system as defined in claim 6, wherein the series computer file of the encrypted computer file and the encrypted voiceprint characteristic file is calculated to generate message authentication codes; in a decryption process, the decrypted voiceprint characteristic file and the decrypted electronic data are further required to compare with the message authentication codes in the computer system.

8.  The voiceprint-lock system as defined in claim 7, wherein the voiceprint-lock system employs the ordinary key for encrypting the series computer file of the encrypted computer file and the encrypted voiceprint characteristic file in generating the message authentication codes, and decrypting the encrypted message authentication codes.

9.  The voiceprint-lock system as defined in claim 1, wherein the voiceprint-lock system employs a voiceprint verification system used to generate the voiceprint characteristic file.

10. The voiceprint-lock system as defined in claim 9, wherein the voiceprint verification system including:

    a front-end processing portion for carrying out front-end processing on raw voice data input into the voiceprint verification system, separating effective voice data from non-effective voice data, and then retrieving the effective voice data;

a feature-retrieving portion for retrieving features from the effective voice data;

a storage portion for storing the features; and

an operational portion for carrying out calculation on the features stored in the storage portion and features of a voice input into the voiceprint verification system.

11. The voiceprint-lock system as defined in claim 10, wherein the voiceprint verification system further including a training system that employs the front-end processing portion and the feature-retrieving portion to obtain model parameters of the raw voice data.

12. The voiceprint-lock system as defined in claim 11, wherein the training system employs Viterbi algorithm obtain a most similar path for calculating the model parameters to be stored.

13. The voiceprint-lock system as defined in claim 9, wherein the voiceprint verification system further including a testing system that employs the front-end processing portion and the feature-retrieving portion to obtain the features of the raw voice data.

FIG. 1

status

| 1 | 2 | 3 |

frame 1 2 3 4 5 6 7 8 9 10 11 12 13

# FIG. 2

status 1 2 3 N

sample voice 1

sample voice 2

sample voice 3

frame

# FIG. 3

FIG. 4

FIG. 5

status

sample voice 1 ○ ○ ○ ○ ○ ○ ○ ○ ○ ○ ○

sample voice 2 ○ ○ ○ ○ ○ ○ ○ ○ ○ ○ ○ ○

sample voice 3 ○ ○ ○ ○ ○ ○ ○ ○ ○ ○

frame 1 2 3 4 5 6 7 8 9 10 11 12

possibility of most similarity=2156

# FIG. 6

status

sample voice 1 ○ ○ ○ ○ ○ ○ ○ ○ ○ ○ ○

sample voice 2 ○ ○ ○ ○ ○ ○ ○ ○ ○ ○ ○ ○

sample voice 3 ○ ○ ○ ○ ○ ○ ○ ○ ○ ○

frame 1 2 3 4 5 6 7 8 9 10 11 12

possibility of most similarity=3171

# FIG. 7

status

sample voice 1 ◯ ◯ ◯ ◯ ◯ ◯ ◯ ◯ ◯ ◯ ◯

sample voice 2 ◯ ◯ ◯ ◯ ◯ ◯ ◯ ◯ ◯ ◯ ◯

sample voice 3 ◯ ◯ ◯ ◯ ◯ ◯ ◯ ◯ ◯ ◯

frame  1  2  3  4  5  6  7  8  9  10  11  12

possibility of most similarity=3571

## FIG. 8

status

sample voice 1

sample voice 2

sample voice 3

frame  1  2  3  4  5  6  7  8  9  10  11  12

possibility of most similarity=3571

## FIG. 9

FIG. 10

Kc

42 — computer file

41 — voiceprint characteristic file

40

E

E
K

SHA 256    E
K

4

D
K

voiceprint characteristic file    41

D
K

D
K

D
Kc

voiceprint verification ← input voice

Y

N

exit

computer file — 42

SHA 256

verification of message authentication

N → exit

Y

computer file

FIG. 11

| | | | |
|---|---|---|---|
| European Patent Office | **EUROPEAN SEARCH REPORT** | | Application Number |
| | | | EP 05 01 8670 |

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br><br>Y | US 2004/148509 A1 (WU YONG DONG)<br>29 July 2004 (2004-07-29)<br><br>* abstract *<br>* page 2, paragraph 18 *<br>* page 2, paragraph 21 - paragraph 24 *<br>* page 2, paragraph 30 - paragraph 35 *<br>* page 3, paragraph 50 - paragraph 59 *<br>* page 4, paragraph 71 - paragraph 72 *<br>* figure 1 *<br>----- | 1-3,5,<br>9-11,13<br>12 | G06F1/00 |
| Y | US 2005/102142 A1 (SOUFFLET FREDERIC ET AL) 12 May 2005 (2005-05-12)<br>* abstract *<br>* page 5, paragraph 122 - paragraph 126 *<br>----- | 12 | |
| X | US 6 038 315 A (STRAIT ET AL)<br>14 March 2000 (2000-03-14)<br>* abstract *<br>* column 1, line 30 - column 2, line 63 *<br>* column 5, line 12 - line 35 *<br>----- | 1-6 | |
| X | US 2005/015596 A1 (BOWERS CHARLES R)<br>20 January 2005 (2005-01-20)<br>* abstract *<br>* page 2, paragraph 22 - paragraph 25 *<br>* page 3, paragraph 27 - paragraph 34 *<br>* page 4, paragraph 36 - paragraph 38 *<br>* page 6, paragraph 59 *<br>* figures 2-4 *<br>----- | 1-3,5,9,<br>13 | TECHNICAL FIELDS SEARCHED (IPC)<br><br>G06F<br>G07C |

The present search report has been drawn up for all claims

| Place of search | Date of completion of the search | Examiner |
|---|---|---|
| Munich | 2 March 2006 | Bichler, M |

EPO FORM 1503 03.82 (P04C01)

## ANNEX TO THE EUROPEAN SEARCH REPORT
## ON EUROPEAN PATENT APPLICATION NO.

EP 05 01 8670

This annex lists the patent family members relating to the patent documents cited in the above-mentioned European search report.
The members are as contained in the European Patent Office EDP file on
The European Patent Office is in no way liable for these particulars which are merely given for the purpose of information.

02-03-2006

| Patent document cited in search report | | Publication date | Patent family member(s) | | Publication date |
|---|---|---|---|---|---|
| US 2004148509 | A1 | 29-07-2004 | WO | 02078249 A1 | 03-10-2002 |
| US 2005102142 | A1 | 12-05-2005 | CN | 1491412 A | 21-04-2004 |
| | | | EP | 1362343 A1 | 19-11-2003 |
| | | | FR | 2820872 A1 | 16-08-2002 |
| | | | WO | 02065454 A1 | 22-08-2002 |
| | | | JP | 2004530149 T | 30-09-2004 |
| | | | MX | PA03007178 A | 04-12-2003 |
| US 6038315 | A | 14-03-2000 | NONE | | |
| US 2005015596 | A1 | 20-01-2005 | NONE | | |

EPO FORM P0459

For more details about this annex : see Official Journal of the European Patent Office, No. 12/82

**EP 1 760 566 A1**

**REFERENCES CITED IN THE DESCRIPTION**

**Patent documents cited in the description**

- US 20020116189 A